# EUROPEAN PATENT APPLICATION

(11) **EP 4 807 240 A1**
(43) Date of publication of application: **16.09.2026**
(21) Application number: 24887356.4
(22) Date of filing: 27.05.2024
(51) Int. Cl.: F21S 45/48, F21S 45/49, B60Q 1/00, F21S 45/50

(54) **CONNECTING MEMBER, HEAT DISSIPATION APPARATUS, HEAT DISSIPATION SYSTEM, AND MOBILE TERMINAL**

(30) Priority: 10.11.2023 CN 202311504408
(71) Applicant: Yinwang Intelligent Technologies Co., Ltd., Shenzhen, Guangdong 518110 (CN)
(72) Inventor: LUO, Wenzheng, Shenzhen, Guangdong 518129 (CN); JIA, Lirui, Shenzhen, Guangdong 518129 (CN); HUANG, Zhiyang, Shenzhen, Guangdong 518129 (CN)
(74) Representative: Maiwald GmbH
(86) International application number: PCT/CN2024/095520
(87) International publication number: WO 2025/097732

(57) **Abstract**

A connecting member, a heat dissipation apparatus, a heat dissipation system, and a mobile terminal are provided, and relate to the field of heat dissipation technologies. The connecting member is provided with a mounting hole, the mounting hole penetrates through the connecting member in a thickness direction of the connecting member, a material of the connecting member includes an elastic material, and the connecting member includes a connecting part and a deformation part. The deformation part is fastened to the connecting part, the deformation part and the connecting part are annular structures surrounding the mounting hole, and the deformation part protrudes from the connecting part in a thickness direction of the connecting part. A heat dissipation component is disposed on an outer side of a lamp housing through the mounting hole of the connecting member, so that the heat dissipation component can be disposed outside, thereby improving heat dissipation efficiency of a vehicle lamp. In addition, through elastic deformation of the connecting part and the deformation part of the connecting member, a position of a lamp assembly can be adjusted while sealing performance of the vehicle lamp is ensured, thereby implementing a light adjustment function of the vehicle lamp, and meeting requirements for performance and reliability of the vehicle lamp.

## Description

This application claims priority to Chinese Patent Application No. 202311504408.8, filed with the China National Intellectual Property Administration on November 10, 2023 and entitled "CONNECTING MEMBER, HEAT DISSIPATION APPARATUS, HEAT DISSIPATION SYSTEM, AND MOBILE TERMINAL", which is incorporated herein by reference in its entirety.

### TECHNICAL FIELD

This application relates to the field of heat dissipation technologies, and in particular, to a connecting member, a heat dissipation apparatus, a heat dissipation system, and a mobile terminal.

### BACKGROUND

With growth of the automobile industry, as a functional part and a styling part of a vehicle, a vehicle lamp plays an increasingly important role in overall vehicle competitiveness. In the future, the vehicle lamp will evolve toward a more aesthetically pleasing design, higher performance, and richer functionality. With improvement of performance and a power of the vehicle lamp, a heat dissipation problem of the vehicle lamp has become a major obstacle to product evolution.

Currently, a full-load power of a vehicle lamp light source is up to 50 W, or even more than 60 W. However, due to a limitation of enclosed space within the lamp, the air inside the lamp cannot exchange heat with the outside through convection, resulting in low heat dissipation efficiency. Consequently, an ambient temperature inside the lamp may easily rise sharply, and a light emitting body may be burnt. As a result, in most application scenarios, reliability of the vehicle lamp needs to be ensured by reducing a light emitting power of the vehicle lamp and sacrificing performance of the vehicle lamp.

Therefore, a feasible solution is urgently needed to improve the heat dissipation efficiency of the vehicle lamp and meet requirements for performance and reliability of the vehicle lamp.

### SUMMARY

Embodiments of this application provide a connecting member, a heat dissipation apparatus, a heat dissipation system, and a mobile terminal, to improve heat dissipation efficiency of a vehicle lamp and meet requirements for performance and reliability of the vehicle lamp.

**According to a first aspect,** an embodiment of this application provides a connecting member. The connecting member is provided with a mounting hole, the mounting hole penetrates through the connecting member in a thickness direction of the connecting member, a material of the connecting member includes an elastic material, and the connecting member includes:
a connecting part and a deformation part, where
the deformation part is fastened to the connecting part, the deformation part and the connecting part are annular structures surrounding the mounting hole, and the deformation part protrudes from the connecting part in a thickness direction of the connecting part.

This embodiment of this application provides a connecting member, and relates to the field of heat dissipation technologies. The connecting member may be specifically used in a vehicle lamp, and is configured to connect to a lamp housing and/or a heat dissipation component, to improve heat dissipation efficiency of the vehicle lamp and meet requirements for performance and reliability of the vehicle lamp.

The connecting member is provided with a mounting hole, and a mounting hole penetrates through the connecting member in a thickness direction of the connecting member. It may be understood that a position of the mounting hole may be used to place the heat dissipation component, and the heat dissipation component is disposed on an outer side of the lamp housing through the mounting hole, so that the heat dissipation component can be disposed outside, thereby improving the heat dissipation efficiency of the vehicle lamp. In addition, a material of the connecting member includes an elastic material. Therefore, the connecting member may be understood as a flexible connecting structure. The connecting member specifically includes a connecting part and a deformation part. The connecting part is fastened to the deformation part, the deformation part and the connecting part are both annular structures surrounding the mounting hole, and the deformation part protrudes from the connecting part in a thickness direction of the connecting part. It may be understood that the annular structures formed by the deformation part and the connecting part each may be specifically a square ring structure, a circular ring structure, an elliptical ring structure, or the like. This is not limited in this embodiment of this application. It may be understood that, that the deformation part protrudes from the connecting part in the thickness direction of the connecting part may be protruding toward the outer side of the lamp housing, or protruding toward an inner side of the lamp housing, which may be specifically determined based on a size of space between components inside the vehicle lamp. This is not limited in this embodiment of this application.

Currently, a heat dissipation component of a vehicle lamp is usually disposed on an inner side of a lamp housing. Due to a limitation of enclosed space within the lamp, the air inside the lamp cannot exchange heat with the outside through convection, resulting in low heat dissipation efficiency. Consequently, an ambient temperature inside the lamp may easily rise sharply, and a light emitting body may be burnt. As a result, in most application scenarios, reliability of the vehicle lamp needs to be ensured by reducing a light emitting power of the vehicle lamp and sacrificing performance of the vehicle lamp.

However, in this embodiment of this application, the heat dissipation component is disposed on the outer side of the lamp housing through the mounting hole of the connecting member, so that the heat dissipation component can be disposed outside, thereby improving the heat dissipation efficiency of the vehicle lamp. In addition, through elastic deformation of the connecting part and the deformation part of the connecting member, a position of a lamp assembly can be adjusted while sealing performance of the vehicle lamp is ensured, thereby implementing a light adjustment function of the vehicle lamp, and meeting the requirements for performance and reliability of the vehicle lamp.

**In a possible implementation,** a cross section of the deformation part in the thickness direction of the connecting member is in an arc shape.

In an implementation of this application, a possible specific implementation of a form of the deformation part is provided. Specifically, a cross section of the deformation part in the thickness direction of the connecting member is in an arc shape. For example, the cross section may be specifically in a semi-circle shape. Optionally, the semi-circle may protrude toward the outer side of the lamp housing, or may protrude toward the inner side of the lamp housing, which may be specifically determined based on the size of the space between the components inside the vehicle lamp. This is not limited in this embodiment of this application. According to this embodiment of this application, a degree of elastic deformation of the deformation part can be increased, so that the position of the lamp assembly has larger adjustment space in a direction such as forward or backward, and a larger light adjustment angle can be accommodated, thereby improving the performance of the vehicle lamp.

**In a possible implementation,** the deformation part includes at least one wrinkled section, and a wrinkle direction of the wrinkled section is a direction from the mounting hole to the deformation part.

In an implementation of this application, a possible specific implementation of a form of the deformation part is provided. Specifically, the deformation part includes at least one wrinkled section, and a wrinkle direction of the wrinkled section is a direction from the mounting hole to the deformation part. Through deformation of the wrinkled section in this embodiment of this application, a degree of flexible extension of the deformation part can be increased, so that the position of the lamp assembly has larger adjustment space in a direction such as upward, downward, leftward, or rightward, and a larger light adjustment angle can be accommodated, thereby improving the performance of the vehicle lamp.

**In a possible implementation,** the deformation part includes a bent part, a bending direction of the bent part is around the thickness direction of the connecting part, and the bent part includes at least one wrinkled section.

In an implementation of this application, a possible specific implementation of a form of the deformation part is provided. Specifically, the deformation part includes one or more bent parts, a bending direction of the bent part is around the thickness direction of the connecting part, the bent part includes at least one wrinkled section, and a wrinkle direction of the wrinkled section is a direction from the mounting hole to the deformation part. Through the bent part in this embodiment of this application, the deformation part can be the annular structure surrounding the mounting hole, so that the position of the mounting hole is reserved for placing the heat dissipation component. In this way, the heat dissipation component is disposed outside the lamp housing, and limited space inside the vehicle lamp can be fully used, thereby improving space resource utilization.

**In a possible implementation,** the deformation part further includes a straight part, an extension direction of the straight part is parallel to a length direction or a width direction of the connecting part, and the straight part includes at least one wrinkled section.

In an implementation of this application, a possible specific implementation of a form of the deformation part is provided. Specifically, the deformation part further includes one or more straight parts, an extension direction of the straight part is parallel to a length direction or a width direction of the connecting part, the straight part includes at least one wrinkled section, and a wrinkle direction of the wrinkled section is a direction from the mounting hole to the deformation part. Optionally, the one or more straight parts are fastened to the one or more bent parts, to jointly form an annular structure surrounding the mounting hole. By using the position of the mounting hole, the heat dissipation component is disposed outside the lamp housing, and limited space inside the vehicle lamp can be fully used, thereby improving space resource utilization.

**In a possible implementation,** the connecting part includes:
a first connecting part and a second connecting part, where
the first connecting part and the second connecting part are annular structures surrounding the mounting hole, an inner periphery of the first connecting part forms a hole wall surface of the mounting hole, the deformation part surrounds an outer periphery of the first connecting part, an inner periphery of the deformation part is fastened to the outer periphery of the first connecting part, the second connecting part surrounds an outer periphery of the deformation part, and an inner periphery of the second connecting part is fastened to the outer periphery of the deformation part.

In an implementation of this application, a possible specific implementation of a form of the connecting part is provided. Specifically, the connecting part includes a first connecting part and a second connecting part, the first connecting part and the second connecting part are annular structures surrounding the mounting hole, an inner periphery of the first connecting part forms a hole wall surface of the mounting hole, the deformation part surrounds an outer periphery of the first connecting part, an inner periphery of the deformation part is fastened to the outer periphery of the first connecting part, the second connecting part surrounds an outer periphery of the deformation part, and an inner periphery of the second connecting part is fastened to the outer periphery of the deformation part. It may be understood that, in the direction from the mounting hole to the deformation part, the first connecting part, the deformation part, and the second connecting part are sequentially arranged, and any two parts are fastened to each other by using inner/outer peripheries of the two parts. Through the connecting member including the first connecting part, the deformation part, and the second connecting part in this embodiment of this application, the heat dissipation component can be disposed outside the lamp housing, thereby improving the heat dissipation efficiency of the vehicle lamp. In addition, through elastic deformation of the first connecting part, the deformation part, and the second connecting part of the connecting member, the position of the lamp assembly can be adjusted while the sealing performance of the vehicle lamp is ensured, thereby implementing the light adjustment function of the vehicle lamp, and meeting the requirements for performance and reliability of the vehicle lamp.

**In a possible implementation,** the first connecting part includes a first surface and a second surface, the first surface and the second surface are disposed opposite to each other in the thickness direction of the connecting member, and the deformation part protrudes from the first surface.

The connecting member further includes a first protrusion part and a second protrusion part, the first protrusion part and the second protrusion part are annular structures surrounding the mounting hole, and the first protrusion part and the second protrusion part protrude from the second surface.

In an implementation of this application, a possible specific implementation of a form of the connecting member is provided. Specifically, the first connecting part of the connecting member includes a first surface and a second surface, and the first surface and the second surface are disposed opposite to each other in the thickness direction of the connecting member. It may be understood that the first surface may be understood as a surface facing the outer side of the lamp housing, and the second surface may be understood as a surface facing the inner side of the lamp housing. In addition, the deformation part protrudes from the first surface, and optionally, the deformation part may alternatively protrude from the second surface, which may be specifically determined based on the size of the space between the components inside the vehicle lamp. This is not limited in this embodiment of this application. The connecting member in this embodiment of this application further includes a first protrusion part and a second protrusion part, the first protrusion part and the second protrusion part are annular structures surrounding the mounting hole, and the first protrusion part and the second protrusion part protrude from the second surface. It may be understood that, similar to the deformation part and the connecting part, the annular structures formed by the first protrusion part and the second protrusion part each may be specifically a square ring structure, a circular ring structure, an elliptical ring structure, or the like. This is not limited in this embodiment of this application. Optionally, the connecting member in this embodiment of this application may further include other protrusion parts similar to the first protrusion part and the second protrusion part. Through the protrusion parts in the connecting member in this embodiment of this application, a sealed connection to the lamp housing or the heat dissipation component can be implemented, so that dust and water vapor can be effectively prevented from intruding into space inside the vehicle lamp and damaging the lamp assembly and a circuit, thereby achieving a good lighting effect and a long service life.

**In a possible implementation,** in a direction from the mounting hole to the connecting part, the first protrusion part and the second protrusion part are disposed adjacently with an interval to form a first connecting groove, and the first connecting groove is configured to connect to a to-be-connected member.

In an implementation of this application, a possible specific implementation of a form of the protrusion part is provided. Specifically, in a direction from the mounting hole to the connecting part, the first protrusion part and the second protrusion part are disposed adjacently with an interval to form a first connecting groove, and the first connecting groove is configured to connect to a to-be-connected member. The to-be-connected member may be the lamp housing, the heat dissipation component, or the like. Optionally, the connecting member in this embodiment of this application may further include other protrusion parts similar to the first protrusion part and the second protrusion part. The other protrusion parts may also be disposed adjacently with intervals to form a plurality of connecting grooves, and the plurality of connecting grooves are configured to connect to the lamp housing or the heat dissipation component. By using the connecting groove formed between the protrusion parts in the connecting member in this embodiment of this application, the sealed connection to the lamp housing or the heat dissipation component can be implemented, so that the dust and water vapor can be effectively prevented from intruding into the space inside the vehicle lamp and damaging the lamp assembly and the circuit, thereby achieving the good lighting effect and the long service life.

**In a possible implementation,** the second connecting part includes a third surface and a fourth surface, the third surface and the fourth surface are disposed opposite to each other in the thickness direction of the connecting member, and the deformation part protrudes from the third surface.

The connecting member further includes a third protrusion part and a fourth protrusion part, the third protrusion part and the fourth protrusion part are annular structures surrounding the mounting hole, and the third protrusion part and the fourth protrusion part protrude from the fourth surface.

In an implementation of this application, a possible specific implementation of a form of the connecting member is provided. Specifically, the second connecting part of the connecting member includes a third surface and a fourth surface, and the third surface and the fourth surface are disposed opposite to each other in the thickness direction of the connecting member. It may be understood that the third surface may be understood as a surface facing the outer side of the lamp housing, and the fourth surface may be understood as a surface facing the inner side of the lamp housing. In addition, the deformation part protrudes from the third surface, and optionally, the deformation part may alternatively protrude from the fourth surface, which may be specifically determined based on the size of the space between the components inside the vehicle lamp. This is not limited in this embodiment of this application. The connecting member in this embodiment of this application further includes a third protrusion part and a fourth protrusion part, the third protrusion part and the fourth protrusion part are annular structures surrounding the mounting hole, and the third protrusion part and the fourth protrusion part protrude from the fourth surface. It may be understood that, similar to the deformation part and the connecting part, the annular structures formed by the third protrusion part and the fourth protrusion part each may be specifically a square ring structure, a circular ring structure, an elliptical ring structure, or the like. This is not limited in this embodiment of this application. Optionally, the connecting member in this embodiment of this application may further include other protrusion parts similar to the third protrusion part and the fourth protrusion part. Through the protrusion parts in the connecting member in this embodiment of this application, a sealed connection to the lamp housing or the heat dissipation component can be implemented, so that dust and water vapor can be effectively prevented from intruding into space inside the vehicle lamp and damaging the lamp assembly and a circuit, thereby achieving a good lighting effect and a long service life.

**In a possible implementation,** in a direction from the mounting hole to the connecting part, the third protrusion part and the fourth protrusion part are disposed adjacently with an interval to form a second connecting groove, and the second connecting groove is configured to connect to a to-be-connected member.

In an implementation of this application, a possible specific implementation of a form of the protrusion part is provided. Specifically, in a direction from the mounting hole to the connecting part, the third protrusion part and the fourth protrusion part are disposed adjacently with an interval to form a second connecting groove, and the second connecting groove is configured to connect to a to-be-connected member. The to-be-connected member may be the lamp housing, the heat dissipation component, or the like. Optionally, the connecting member in this embodiment of this application may further include other protrusion parts similar to the third protrusion part and the fourth protrusion part. The other protrusion parts may also be disposed adjacently with intervals to form a plurality of connecting grooves, and the plurality of connecting grooves are configured to connect to the lamp housing or the heat dissipation component. By using the connecting groove formed between the protrusion parts in the connecting member in this embodiment of this application, the sealed connection to the lamp housing or the heat dissipation component can be implemented, so that the dust and water vapor can be effectively prevented from intruding into the space inside the vehicle lamp and damaging the lamp assembly and the circuit, thereby achieving the good lighting effect and the long service life.

**In a possible implementation,** the first surface of the first connecting part and the third surface of the second connecting part are located on a same surface, and the second surface of the first connecting part and the fourth surface of the second connecting part are located on a same surface.

In an implementation of this application, a possible specific implementation of a relative position relationship between the surfaces is provided. Specifically, the first surface of the first connecting part and the third surface of the second connecting part are located on a same surface, and the second surface of the first connecting part and the fourth surface of the second connecting part are located on a same surface. It may be understood that, the surface, of the first connecting part, facing the outer side of the lamp housing and the surface, of the second connecting part, facing the outer side of the lamp housing are located on the same surface, and the surface, of the first connecting part, facing the inner side of the lamp housing and the surface, of the second connecting part, facing the inner side of the lamp housing are located on the same surface. According to the relative position relationship of the surfaces designed in this embodiment of this application, single-shot molding of the first connecting part and the second connecting part can be implemented, with an advantage of simple manufacturing, and space occupation can be reduced.

**In a possible implementation,** the to-be-connected member is integrally formed with the first connecting groove and/or the second connecting groove, or the to-be-connected member is connected to the first connecting groove and/or the second connecting groove through a fastener.

In an implementation of this application, a possible specific implementation of a connection relationship between the to-be-connected member and the connecting groove is provided. Specifically, the to-be-connected member is integrally formed with the first connecting groove and/or the second connecting groove, and the to-be-connected member may be the lamp housing, the heat dissipation component, or the like. Specifically, the to-be-connected member may be integrally formed with the connecting groove through single-shot molding or double-shot molding. For example, the to-be-connected member is the lamp housing. The lamp housing may be integrally formed with the connecting groove through single-shot molding. Through a partial thinning design of the connecting member, functions of a flexible connection and a sealed connection of the connecting member can be implemented, with advantages of simple manufacturing and assembly, low costs, and small space occupation. Alternatively, the lamp housing may be integrally formed with the connecting groove through double-shot molding or overmolding. For example, the inner side of the lamp housing is made of a rigid plastic material, and the outer side of the lamp housing is made of a flexible plastic material. In this way, functions of a flexible connection and a sealed connection between the connecting member and the lamp housing can be implemented, an opening size of the lamp housing can be greatly reduced, and a light adjustment resistance can be reduced, with advantages of simple assembly and low costs. Alternatively, the connecting member is connected to the first connecting groove and/or the second connecting groove through the fastener. For example, the to-be-connected member is the lamp housing. The lamp housing may be fastened to the connecting groove through a fastener such as a screw thread, a pin, or a removable cover plate. According to this embodiment of this application, the heat dissipation component can be disposed outside, thereby improving the heat dissipation efficiency of the vehicle lamp. In addition, through the elastic deformation of the connecting part and the deformation part of the connecting member, the position of the lamp assembly can be adjusted while the sealing performance of the vehicle lamp is ensured, thereby implementing the light adjustment function of the vehicle lamp, and meeting the requirements for performance and reliability of the vehicle lamp.

**According to a second aspect,** an embodiment of this application provides a heat dissipation apparatus. The heat dissipation apparatus is configured to connect to a heat dissipation component, and the heat dissipation apparatus includes a lamp housing and the connecting member according to any one of the first aspect or the possible implementations of the first aspect.

The heat dissipation component is located on an outer side of the lamp housing, the connecting member is connected to the lamp housing, and the connecting member is integrally formed with the lamp housing.

This embodiment of this application provides a heat dissipation apparatus, and relates to the field of heat dissipation technologies. The heat dissipation apparatus may be specifically used in a vehicle lamp, and is configured to connect to a heat dissipation component, to improve heat dissipation efficiency of the vehicle lamp and meet requirements for performance and reliability of the vehicle lamp.

The heat dissipation apparatus includes a lamp housing and the connecting member according to any one of the first aspect or the possible implementations of the first aspect. The connecting member is connected to the lamp housing, and the connecting member is integrally formed with the lamp housing.

Currently, a heat dissipation component of a vehicle lamp is usually disposed on an inner side of a lamp housing. Due to a limitation of enclosed space within the lamp, the air inside the lamp cannot exchange heat with the outside through convection, resulting in low heat dissipation efficiency. Consequently, an ambient temperature inside the lamp may easily rise sharply, and a light emitting body may be burnt. As a result, in most application scenarios, reliability of the vehicle lamp needs to be ensured by reducing a light emitting power of the vehicle lamp and sacrificing performance of the vehicle lamp.

However, in this embodiment of this application, the heat dissipation component is disposed on the outer side of the lamp housing through a mounting hole of the connecting member, so that the heat dissipation component can be disposed outside, thereby improving heat dissipation efficiency of the vehicle lamp. In addition, through elastic deformation of the connecting member and a partial thinning design of the connecting member, performance of a flexible connection and a sealed connection of the connecting member can be implemented, a position of a lamp assembly can be adjusted while sealing performance of the vehicle lamp is ensured, thereby implementing a light adjustment function of the vehicle lamp, meeting requirements for performance and reliability of the vehicle lamp, and having advantages of simple manufacturing and assembly, low costs, and small space occupation.

**In a possible implementation,** a joint between the connecting member and the lamp housing is integrally formed from a same material, or a joint between the connecting member and the lamp housing is integrally formed from different materials.

In an implementation of this application, a possible specific implementation of integrally forming of the connecting member and the lamp housing is provided. Specifically, the lamp housing may be integrally formed with the connecting member through single-shot molding. Through a partial thinning design of the connecting member, performance of a flexible connection and a sealed connection of the connecting member can be implemented, with advantages of simple manufacturing and assembly, low costs, and small space occupation. Alternatively, the lamp housing may be integrally formed with the connecting member through double-shot molding or overmolding. For example, the inner side of the lamp housing is made of a rigid plastic material, and the outer side of the lamp housing is made of a flexible plastic material. In this way, performance of a flexible connection and a sealed connection between the connecting member and the lamp housing can be implemented, an opening size of the lamp housing can be greatly reduced, and a light adjustment resistance can be reduced, with advantages of simple assembly and low costs.

**In a possible implementation,** the lamp housing is sealed and connected to the heat dissipation component by using a sealing ring.

In an implementation of this application, a possible specific implementation of a connection relationship between the lamp housing and the heat dissipation component is provided. Specifically, the lamp housing is sealed and connected to the heat dissipation component by using a sealing ring, where the sealing ring may be made of a flexible plastic material. In this way, a sealed connection between the lamp housing and the heat dissipation component can be implemented, so that dust and water vapor can be effectively prevented from intruding into space inside the vehicle lamp and damaging the lamp assembly and a circuit, thereby achieving a good lighting effect and a long service life.

**According to a third aspect,** an embodiment of this application provides a heat dissipation apparatus. The heat dissipation apparatus is configured to connect to a lamp housing, and the heat dissipation apparatus includes a heat dissipation component and the connecting member according to any one of the first aspect or the possible implementations of the first aspect.

The heat dissipation component is located on an outer side of the lamp housing, the connecting member is connected to the heat dissipation component, and the connecting member is integrally formed with the heat dissipation component.

This embodiment of this application provides a heat dissipation apparatus, and relates to the field of heat dissipation technologies. The heat dissipation apparatus may be specifically used in a vehicle lamp, and is configured to connect to a lamp housing, to improve heat dissipation efficiency of the vehicle lamp and meet requirements for performance and reliability of the vehicle lamp.

The heat dissipation apparatus includes a heat dissipation component and the connecting member according to any one of the first aspect or the possible implementations of the first aspect. The connecting member is connected to the heat dissipation component, and the connecting member is integrally formed with the heat dissipation component.

Currently, a heat dissipation component of a vehicle lamp is usually disposed on an inner side of a lamp housing. Due to a limitation of enclosed space within the lamp, the air inside the lamp cannot exchange heat with the outside through convection, resulting in low heat dissipation efficiency. Consequently, an ambient temperature inside the lamp may easily rise sharply, and a light emitting body may be burnt. As a result, in most application scenarios, reliability of the vehicle lamp needs to be ensured by reducing a light emitting power of the vehicle lamp and sacrificing performance of the vehicle lamp.

However, in this embodiment of this application, the heat dissipation component is disposed on the outer side of the lamp housing through a mounting hole of the connecting member, so that the heat dissipation component can be disposed outside, thereby improving heat dissipation efficiency of the vehicle lamp. In addition, through elastic deformation of the connecting member, performance of a flexible connection and a sealed connection of the connecting member can be implemented, a position of a lamp assembly can be adjusted while sealing performance of the vehicle lamp is ensured, thereby implementing a light adjustment function of the vehicle lamp, meeting requirements for performance and reliability of the vehicle lamp, and having advantages of simple manufacturing and assembly, low costs, and small space occupation.

**In a possible implementation,** a joint between the connecting member and the heat dissipation component is integrally formed from different materials.

In an implementation of this application, a possible specific implementation of integrated forming of the connecting member and the heat dissipation component is provided. Specifically, the heat dissipation component may be integrally formed with the connecting member through double-shot molding or overmolding. For example, double-shot molding or overmolding is performed on a flange plate of the heat dissipation component. In this way, performance of a flexible connection and a sealed connection between the heat dissipation component and the connecting member can be integrated, a mold size can be reduced, and a light adjustment resistance can be reduced, with advantages of simple assembly and low costs.

**In a possible implementation,** the heat dissipation component is sealed and connected to the lamp housing by using a sealing ring.

In an implementation of this application, a possible specific implementation of a connection relationship between the lamp housing and the heat dissipation component is provided. Specifically, the lamp housing is sealed and connected to the heat dissipation component by using a sealing ring, where the sealing ring may be made of a flexible plastic material. In this way, a sealed connection between the lamp housing and the heat dissipation component can be implemented, so that dust and water vapor can be effectively prevented from intruding into space inside the vehicle lamp and damaging the lamp assembly and a circuit, thereby achieving a good lighting effect and a long service life.

**According to a fourth aspect,** an embodiment of this application provides a heat dissipation system. The heat dissipation system includes a lamp housing, a heat dissipation component, a lamp assembly, and the connecting member according to any one of the first aspect or the possible implementations of the first aspect.

Alternatively, the heat dissipation system includes a heat dissipation component, a lamp assembly, and the heat dissipation apparatus according to any one of the second aspect or the possible implementations of the second aspect.

Alternatively, the heat dissipation system includes a lamp housing, a lamp assembly, and the heat dissipation apparatus according to any one of the third aspect or the possible implementations of the third aspect.

**According to a fifth aspect,** an embodiment of this application provides a mobile terminal. The mobile terminal includes the connecting member according to any one of the first aspect or the possible implementations of the first aspect, the heat dissipation apparatus according to any one of the second aspect or the possible implementations of the second aspect, the heat dissipation apparatus according to any one of the third aspect or the possible implementations of the third aspect, or the heat dissipation system according to the fourth aspect.

Optionally, the mobile terminal may be a transportation vehicle, for example, a transportation vehicle used in any possible scenario such as a vehicle, a truck, an aircraft, an unmanned aerial vehicle, a slow transport vehicle, a spacecraft, or a watercraft. This is not limited in this embodiment of this application.

In this embodiment of this application, a heat dissipation component is disposed on an outer side of a lamp housing through a mounting hole of the connecting member, so that the heat dissipation component can be disposed outside, thereby improving heat dissipation efficiency of a vehicle lamp. In addition, through elastic deformation of a connecting part and a deformation part of the connecting member, a position of a lamp assembly can be adjusted while sealing performance of the vehicle lamp is ensured, thereby implementing a light adjustment function of the vehicle lamp, and meeting requirements for performance and reliability of the vehicle lamp.

### BRIEF DESCRIPTION OF DRAWINGS

To describe technical solutions in embodiments of this application more clearly, the following briefly describes accompanying drawings used in embodiments of this application. It is clear that the accompanying drawings described below show merely some embodiments of this application, and a person of ordinary skill in the art may still derive other drawings from these accompanying drawings without creative efforts.
FIG. 1 is a cross-sectional view of a heat dissipation system according to an embodiment of this application;
FIG. 2 is an assembly diagram of a heat dissipation system according to an embodiment of this application;
FIG. 3 is a plan view of the heat dissipation system according to an embodiment of this application;
FIG. 4 is a cross-sectional view of the heat dissipation system according to an embodiment of this application;
FIG. 5 is an exploded view of the heat dissipation system according to an embodiment of this application;
FIG. 6 is an exploded view of the heat dissipation system according to an embodiment of this application;
FIG. 7 is a diagram of a structure of a connecting member according to an embodiment of this application;
FIG. 8 is a diagram of a structure of the connecting member from another angle of view according to an embodiment of this application;
FIG. 9 is a diagram of a structure of the connecting member from another angle of view according to an embodiment of this application;
FIG. 10 is a diagram of a structure of the connecting member from another angle of view according to an embodiment of this application;
FIG. 11 is a diagram of a structure of the connecting member according to an embodiment of this application;
FIG. 12 is a diagram of a structure of the connecting member according to an embodiment of this application;
FIG. 13 is a diagram of a structure of the connecting member according to an embodiment of this application; and
FIG. 14 is a diagram of a mobile terminal according to an embodiment of this application.

### DESCRIPTION OF EMBODIMENTS

To make objectives, technical solutions, and advantages of this application clearer, the following describes embodiments of this application with reference to accompanying drawings in embodiments of this application.

Terms such as "first" and "second" in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It can be explicitly and implicitly understood by a person skilled in the art that, in embodiments of this application, unless otherwise specified or a logical conflict occurs, terms and/or descriptions in embodiments are consistent and may be mutually referenced, and technical features in different embodiments may be combined based on an internal logical relationship thereof, to form a new embodiment.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate the following three cases: only A exists, only B exists, and both A and B exist, where A and B may be singular or plural. The character "/" usually indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

In descriptions of this application, orientation or location relationships indicated by terms such as "center", "upper", "lower", "vertical", "horizontal", "inside", "outside", "left", and "side" are orientation or location relationships based on the accompanying drawings, and are merely intended for ease of describing this application and simplifying description, but do not indicate or imply that an indicated apparatus or element needs to have a specific orientation or needs to be construed and operated in a specific orientation. Therefore, such terms should not be understood as a limitation on this application. It should be understood that a Z direction, a Y direction, and the like mentioned in some embodiments of this application are described by using an XYZ rectangular coordinate system as a reference, to facilitate description of features in this solution, but do not indicate or imply that a specified apparatus or element needs to have a specific orientation, and needs to be construed and operated in a specific orientation.

In embodiments of this application, "end" in terms such as "one end", "the other end", "terminal end", "free end", "upper end", "lower end", and "connecting end" is not limited to an end, an endpoint, or an end face, but also includes a part of an end, an endpoint, or an end face that extends an axial distance and/or a radial distance on an apparatus or element to which the end, the endpoint, or the end face belongs.

As described in the BACKGROUND, currently, a full-load power of a vehicle lamp light source is up to 50 W, or even more than 60 W. However, due to a limitation of enclosed space within a lamp, the air inside the lamp cannot exchange heat with the outside through convection, resulting in low heat dissipation efficiency. Consequently, an ambient temperature inside the lamp may easily rise sharply, and a light emitting body may be burnt. As a result, in most application scenarios, reliability of the vehicle lamp needs to be ensured by reducing a light emitting power of the vehicle lamp and sacrificing performance of the vehicle lamp.

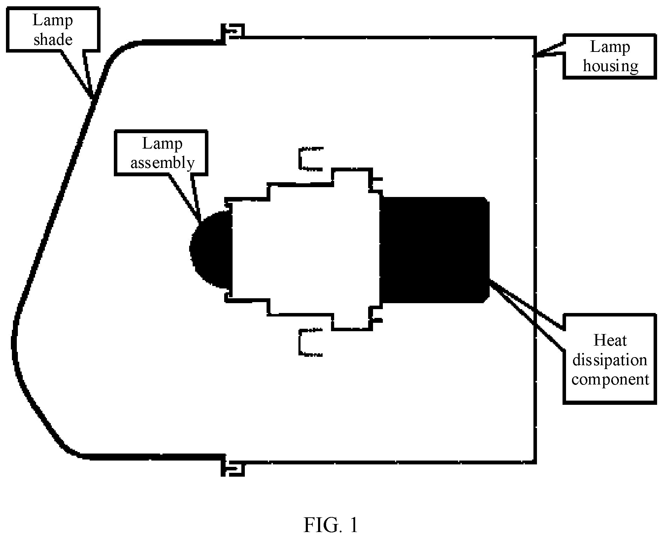

For details, refer to FIG. 1. FIG. 1 is a cross-sectional view of a heat dissipation system according to an embodiment of this application.

As shown in FIG. 1, the heat dissipation system includes a lamp shade, a lamp assembly, a lamp housing, and a heat dissipation component. The heat dissipation component is disposed on an inner side of the lamp housing, resulting in low heat dissipation efficiency. As a result, reliability of a vehicle lamp needs to be ensured by reducing a light emitting power of the vehicle lamp and sacrificing performance of the vehicle lamp.

In view of this, this application provides a connecting member, a heat dissipation apparatus, a heat dissipation system, and a mobile terminal, and relates to the field of heat dissipation technologies. The connecting member, the heat dissipation apparatus, the heat dissipation system, and the mobile terminal may be specifically used in a vehicle lamp, to improve heat dissipation efficiency of the vehicle lamp and meet requirements for performance and reliability of the vehicle lamp.

The following describes the connecting member, the heat dissipation apparatus, the heat dissipation system, and the mobile terminal provided in this application with reference to the accompanying drawings.

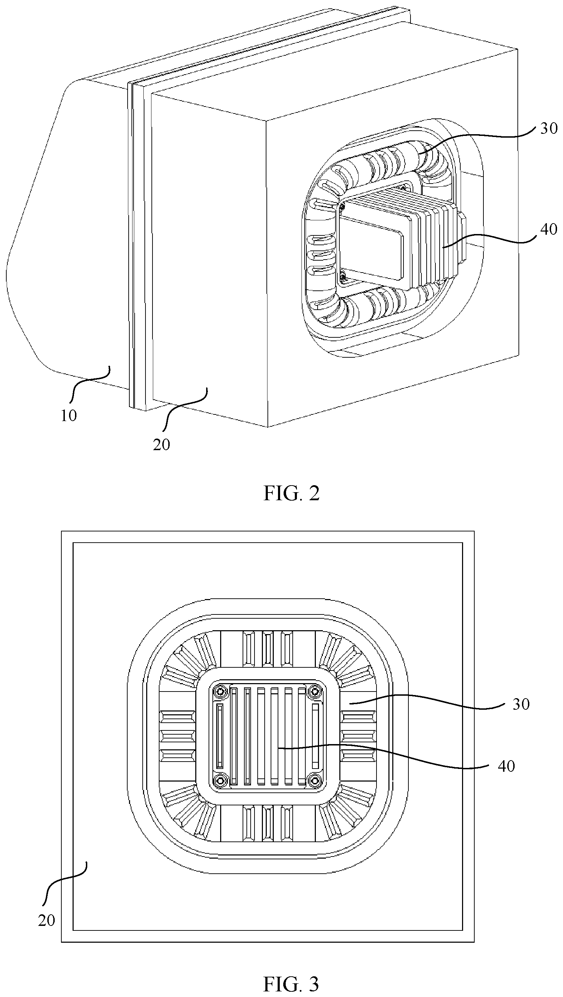

FIG. 2 to FIG. 6 are related diagrams of a heat dissipation system according to an embodiment of this application.

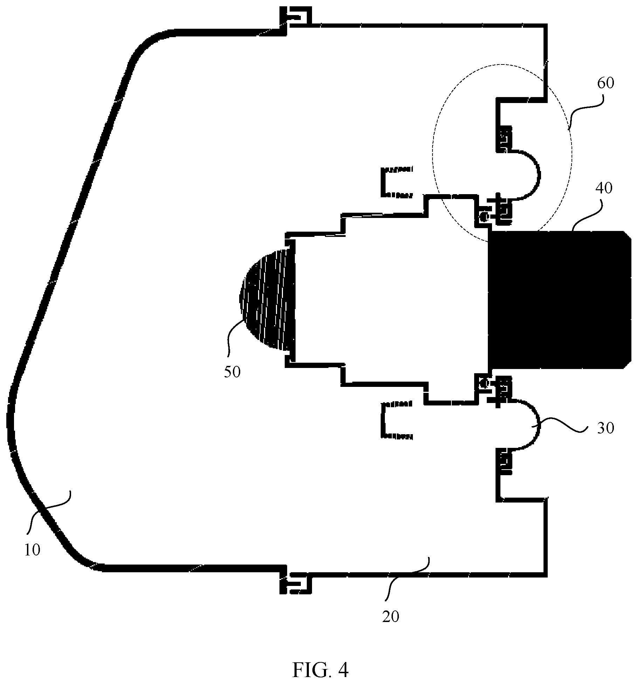

FIG. 2 is an assembly diagram of a heat dissipation system according to an embodiment of this application. FIG. 3 is a plan view of the heat dissipation system according to an embodiment of this application. FIG. 4 is a cross-sectional view of the heat dissipation system according to an embodiment of this application. It may be understood that FIG. 3 is a plan view of the heat dissipation system shown in FIG. 2 in an optical axis direction, and FIG. 4 is a cross-sectional view of the heat dissipation system shown in FIG. 2 in an optical axis direction.

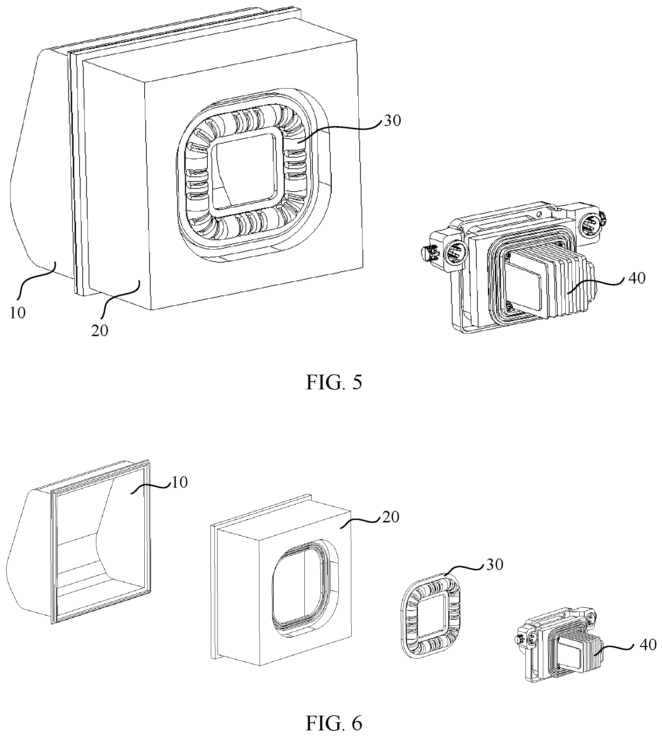

FIG. 5 is an exploded view of the heat dissipation system according to an embodiment of this application. FIG. 6 is an exploded view of the heat dissipation system according to an embodiment of this application. It may be understood that FIG. 5 is an exploded view of a structure of the heat dissipation system shown in FIG. 2, and FIG. 6 further shows an exploded view of the structure of the heat dissipation system shown in FIG. 2 and FIG. 5.

**It can be learned from** **FIG. 2 to FIG. 6** **that the heat dissipation system includes:**
**a lamp shade 10, a lamp housing 20, a connecting member 30, a heat dissipation component 40, and a lamp assembly 50.**

The connecting member 30 is provided with a mounting hole, and the mounting hole penetrates through the connecting member 30 in a thickness direction of the connecting member 30. It may be understood that a position of the mounting hole may be used to place the heat dissipation component 40, and the heat dissipation component 40 is disposed on an outer side of the lamp housing 20 through the mounting hole, so that the heat dissipation component 40 can be disposed outside, thereby improving heat dissipation efficiency of a vehicle lamp.

In addition, a material of the connecting member 30 includes an elastic material. Therefore, the connecting member 30 may be understood as a flexible connecting structure. The connecting member 30 specifically includes a connecting part and a deformation part. The connecting part is fastened to the deformation part, the deformation part and the connecting part are both annular structures surrounding the mounting hole, and the deformation part protrudes from the connecting part in a thickness direction of the connecting part. It may be understood that the annular structures formed by the deformation part and the connecting part each may be specifically a square ring structure, a circular ring structure, an elliptical ring structure, or the like. This is not limited in this embodiment of this application. It may be understood that, that the deformation part protrudes from the connecting part in the thickness direction of the connecting part may be protruding toward the outer side of the lamp housing 20, or protruding toward an inner side of the lamp housing 20, which may be specifically determined based on a size of space between components inside the vehicle lamp. This is not limited in this embodiment of this application.

Currently, a heat dissipation component of a vehicle lamp is usually disposed on an inner side of a lamp housing. Due to a limitation of enclosed space within the lamp, the air inside the lamp cannot exchange heat with the outside through convection, resulting in low heat dissipation efficiency. Consequently, an ambient temperature inside the lamp may easily rise sharply, and a light emitting body may be burnt. As a result, in most application scenarios, reliability of the vehicle lamp needs to be ensured by reducing a light emitting power of the vehicle lamp and sacrificing performance of the vehicle lamp.

However, in this embodiment of this application, the heat dissipation component 40 is disposed on the outer side of the lamp housing 20 through the mounting hole of the connecting member 30, so that the heat dissipation component 40 can be disposed outside, thereby improving the heat dissipation efficiency of the vehicle lamp. In addition, through elastic deformation of the connecting part and the deformation part of the connecting member 30, a position of the lamp assembly 50 can be adjusted while sealing performance of the vehicle lamp is ensured, thereby implementing a light adjustment function of the vehicle lamp, and meeting requirements for performance and reliability of the vehicle lamp.

**It may be understood that improvement of the heat dissipation system in this embodiment of this application mainly lies in a structure form of the connecting member 30 and a manner of connection between the connecting member 30 and the lamp housing 20 and/or the heat dissipation component 40. Therefore, the heat dissipation system in this embodiment of this application should include at least the lamp housing 20, the connecting member 30, and the heat dissipation component 40. Optionally, the heat dissipation system may further include the lamp shade 10 and/or the lamp assembly 50.**

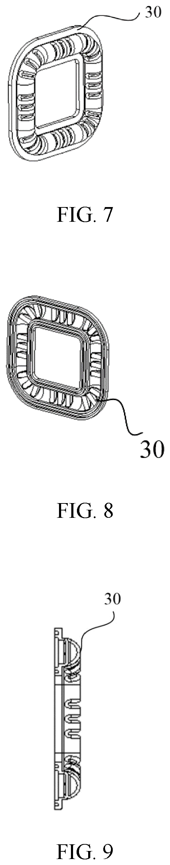

The following describes the connecting member 30 in the heat dissipation system shown in FIG. 2 to FIG. 6 with reference to FIG. 7 to FIG. 13.

It may be understood that a connecting member shown in FIG. 7 to FIG. 13 may be considered as a proper variation or supplement of the connecting member 30 in the heat dissipation system shown in FIG. 2 to FIG. 6. Alternatively, it may be understood that a connecting member shown in FIG. 7 to FIG. 13 may be considered as an embodiment that can exist independently. This is not limited in this application.

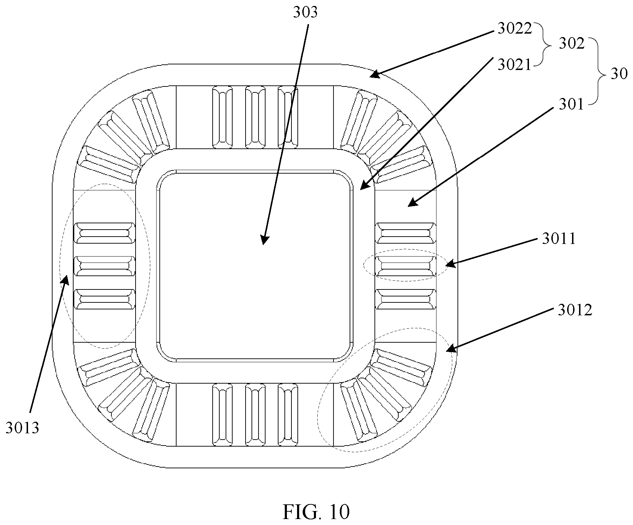

Refer to FIG. 7 to FIG. 10. FIG. 7 is a diagram of a structure of a connecting member according to an embodiment of this application. FIG. 8 is a diagram of a structure of the connecting member from another angle of view according to an embodiment of this application. FIG. 9 is a diagram of a structure of the connecting member from another angle of view according to an embodiment of this application. FIG. 10 is a diagram of a structure of the connecting member from another angle of view according to an embodiment of this application. It may be understood that FIG. 10 may alternatively be considered as a plan view of the connecting member in this embodiment of this application in an optical axis direction. For more intuitive and clear description, the following mainly uses FIG. 10 as an example to describe the connecting member provided in this embodiment of this application.

**It can be learned from** **FIG. 10** **that the connecting member 30 is provided with a mounting hole 303, the mounting hole 303 penetrates through the connecting member 30 in a thickness direction of the connecting member 30, a material of the connecting member 30 includes an elastic material, and the connecting member 30 includes a connecting part 302 and a deformation part 301.**

The deformation part 301 is fastened to the connecting part 302, the deformation part 301 and the connecting part 302 are annular structures surrounding the mounting hole 303, and the deformation part 301 protrudes from the connecting part 302 in a thickness direction of the connecting part 302.

It may be understood that a position of the mounting hole 303 may be used to place a heat dissipation component, and the heat dissipation component is disposed on an outer side of a lamp housing through the mounting hole, so that the heat dissipation component can be disposed outside, thereby improving heat dissipation efficiency of a vehicle lamp.

In addition, the material of the connecting member 30 includes the elastic material. Therefore, the connecting member 30 may be understood as a flexible connecting structure.

The deformation part 301 and the connecting part 302 in the connecting member 30 are both the annular structures surrounding the mounting hole 303. The annular structure may be specifically a square ring structure, a circular ring structure, an elliptical ring structure, or the like. This is not limited in this embodiment of this application.

It may be understood that, that the deformation part 301 protrudes from the connecting part 302 in the thickness direction of the connecting part 302 may be protruding toward the outer side of the lamp housing, or protruding toward an inner side of the lamp housing, which may be specifically determined based on a size of space between components inside the vehicle lamp. This is not limited in this embodiment of this application.

Currently, a heat dissipation component of a vehicle lamp is usually disposed on an inner side of a lamp housing. Due to a limitation of enclosed space within the lamp, the air inside the lamp cannot exchange heat with the outside through convection, resulting in low heat dissipation efficiency. Consequently, an ambient temperature inside the lamp may easily rise sharply, and a light emitting body may be burnt. As a result, in most application scenarios, reliability of the vehicle lamp needs to be ensured by reducing a light emitting power of the vehicle lamp and sacrificing performance of the vehicle lamp.

However, in this embodiment of this application, the heat dissipation component is disposed on the outer side of the lamp housing through the mounting hole 303 of the connecting member 30, so that the heat dissipation component can be disposed outside, thereby improving the heat dissipation efficiency of the vehicle lamp. In addition, through elastic deformation of the connecting part 302 and the deformation part 301 of the connecting member 30, a position of a lamp assembly can be adjusted while sealing performance of the vehicle lamp is ensured, thereby implementing a light adjustment function of the vehicle lamp, and meeting requirements for performance and reliability of the vehicle lamp.

**In a possible embodiment, a cross section of the deformation part 301 in the thickness direction of the connecting member 30 is in an arc shape.**

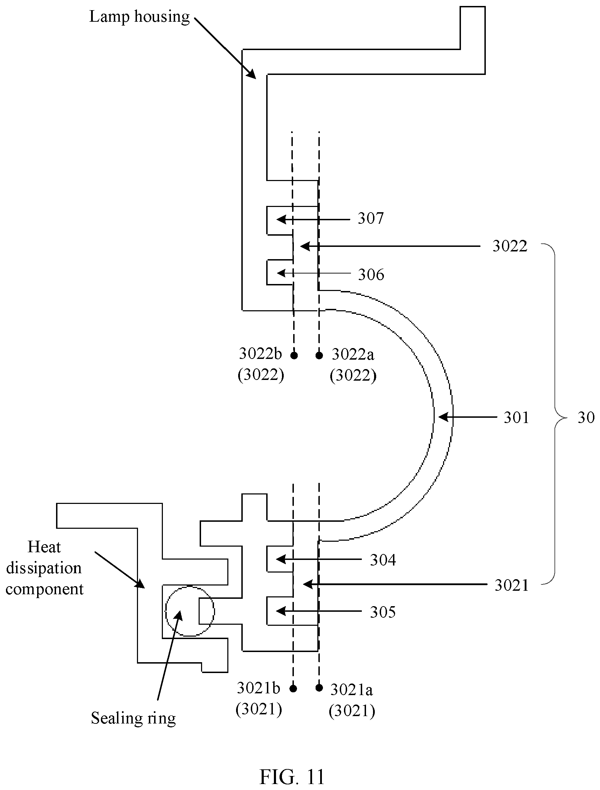

For details, refer to FIG. 11. FIG. 11 is a diagram of a structure of the connecting member according to an embodiment of this application. It may be understood that FIG. 11 may be considered as a partial cross-sectional view of the connecting member shown in FIG. 10 in an optical axis direction. It may be understood that FIG. 11 may further correspond to an enlarged view of a dashed-line area 60 in the heat dissipation system shown in FIG. 4.

It can be learned from FIG. 11 that the cross section of the deformation part 301 in the thickness direction of the connecting member 30 is in a semi-circle shape, and the semi-circle protrudes toward the outer side of the lamp housing.

Optionally, the cross section of the deformation part 301 in the thickness direction of the connecting member 30 may be alternatively in an arc shape such as a semi-ellipse shape or a wave shape. The semi-circle shown in FIG. 11 shall not constitute a limitation on this embodiment of this application.

Optionally, the semi-circle may protrude toward the outer side of the lamp housing, or may protrude toward the inner side of the lamp housing, which may be specifically determined based on the size of the space between the components inside the vehicle lamp. That the semi-circle shown in FIG. 11 protrudes toward the outer side of the lamp housing shall not constitute a limitation on this embodiment of this application.

According to this embodiment of this application, a degree of elastic deformation of the deformation part 301 can be increased, so that the position of the lamp assembly has larger adjustment space in a direction such as forward or backward along an optical axis, and a larger light adjustment angle can be accommodated, thereby improving the performance of the vehicle lamp.

**In a possible embodiment, the deformation part 301 includes at least one wrinkled section 3011, and a wrinkle direction of the wrinkled section 3011 is a direction from the mounting hole 303 to the deformation part 301.**

Through deformation of the wrinkled section 3011 in this embodiment of this application, a degree of flexible extension of the deformation part 301 can be increased, so that the position of the lamp assembly has larger adjustment space in a direction such as upward, downward, leftward, or rightward on a plane perpendicular to the optical axis, and a larger light adjustment angle can be accommodated, thereby improving the performance of the vehicle lamp.

**In a possible embodiment, the deformation part 301 includes a bent part 3012, a bending direction of the bent part 3012 is around the thickness direction of the connecting part 302, and the bent part 3012 includes at least one wrinkled section 3011.**

It may be understood that the deformation part 301 includes one or more bent parts 3012, a bending direction of the bent part 3012 is around the thickness direction of the connecting part 302, the bent part 3012 includes at least one wrinkled section 3011, and a wrinkle direction of the wrinkled section 3011 is a direction from the mounting hole 303 to the deformation part 301.

Through the bent part 3012 in this embodiment of this application, the deformation part 301 can be the annular structure surrounding the mounting hole 303, so that the position of the mounting hole 303 is reserved for placing the heat dissipation component. In this way, the heat dissipation component is disposed outside the lamp housing, and limited space inside the vehicle lamp can be fully used, thereby improving space resource utilization.

**In a possible embodiment, the deformation part 301 further includes a straight part 3013, an extension direction of the straight part 3013 is parallel to a length direction or a width direction of the connecting part 302, and the straight part 3013 includes at least one wrinkled section 3011.**

It may be understood that the deformation part 301 further includes one or more straight parts 3013, an extension direction of the straight part 3013 is parallel to a length direction or a width direction of the connecting part 302, the straight part 3013 includes at least one wrinkled section 3011, and a wrinkle direction of the wrinkled section 3011 is a direction from the mounting hole 303 to the deformation part 301.

Optionally, the one or more straight parts 3013 are fastened to the one or more bent parts 3012, to jointly form an annular structure surrounding the mounting hole 303. By using the position of the mounting hole 303, the heat dissipation component is disposed outside the lamp housing, and limited space inside the vehicle lamp can be fully used, thereby improving space resource utilization.

**In a possible embodiment, the connecting part 302 includes a first connecting part 3021 and a second connecting part 3022.**

The first connecting part 3021 and the second connecting part 3022 are annular structures surrounding the mounting hole 303, an inner periphery of the first connecting part 3021 forms a hole wall surface of the mounting hole 303, the deformation part 301 surrounds an outer periphery of the first connecting part 3021, an inner periphery of the deformation part 301 is fastened to the outer periphery of the first connecting part 3021, the second connecting part 3022 surrounds an outer periphery of the deformation part 301, and an inner periphery of the second connecting part 3022 is fastened to the outer periphery of the deformation part 301.

It may be understood that the connecting part 302 includes a first connecting part 3021 and a second connecting part 3022, the first connecting part 3021 and the second connecting part 3022 are annular structures surrounding the mounting hole 303, an inner periphery of the first connecting part 3021 forms a hole wall surface of the mounting hole 303, the deformation part 301 surrounds an outer periphery of the first connecting part 3021, an inner periphery of the deformation part 301 is fastened to the outer periphery of the first connecting part 3021, the second connecting part 3022 surrounds an outer periphery of the deformation part 301, and an inner periphery of the second connecting part 3022 is fastened to the outer periphery of the deformation part 301.

It may be understood that, in the direction from the mounting hole 303 to the deformation part 301, the first connecting part 3021, the deformation part 301, and the second connecting part 3022 are sequentially arranged, and any two parts are fastened to each other by using inner/outer peripheries of the two parts.

Through the connecting member 30 including the first connecting part 3021, the deformation part 301, and the second connecting part 3022 in this embodiment of this application, the heat dissipation component can be disposed outside the lamp housing, thereby improving the heat dissipation efficiency of the vehicle lamp. In addition, through elastic deformation of the first connecting part 3021, the deformation part 301, and the second connecting part 3022 of the connecting member 30, the position of the lamp assembly can be adjusted while the sealing performance of the vehicle lamp is ensured, thereby implementing the light adjustment function of the vehicle lamp, and meeting the requirements for performance and reliability of the vehicle lamp.

**In a possible embodiment, the first connecting part 3021 includes a first surface 3021a (3021) and a second surface 3021b (3021), the first surface 3021a (3021) and the second surface 3021b (3021) are disposed opposite to each other in the thickness direction of the connecting member 30, and the deformation part 301 protrudes from the first surface 3021a (3021).**

**The connecting member 30 further includes a first protrusion part 304 and a second protrusion part 305, the first protrusion part 304 and the second protrusion part 305 are annular structures surrounding the mounting hole 303, and the first protrusion part 304 and the second protrusion part 305 protrude from the second surface 3021b (3021).**

For details, refer to FIG. 11. It may be understood that the first surface 3021a (3021) may be understood as a surface facing the outer side of the lamp housing, and the second surface 3021b (3021) may be understood as a surface facing the inner side of the lamp housing.

In addition, the deformation part 301 protrudes from the first surface 3021a (3021), and optionally, the deformation part 301 may alternatively protrude from the second surface 3021b

(3021), which may be specifically determined based on the size of the space between the components inside the vehicle lamp. This is not limited in this embodiment of this application.

It may be understood that, similar to the deformation part 301 and the connecting part 302, the annular structures formed by the first protrusion part 304 and the second protrusion part 305 each may be specifically a square ring structure, a circular ring structure, an elliptical ring structure, or the like. This is not limited in this embodiment of this application.

Optionally, the connecting member 30 in this embodiment of this application may further include other protrusion parts similar to the first protrusion part 304 and the second protrusion part 305.

Through the protrusion parts in the connecting member 30 in this embodiment of this application, a sealed connection to the lamp housing or the heat dissipation component can be implemented, so that dust and water vapor can be effectively prevented from intruding into space inside the vehicle lamp and damaging the lamp assembly and a circuit, thereby achieving a good lighting effect and a long service life.

**In a possible embodiment, in a direction from the mounting hole 303 to the connecting part 302, the first protrusion part 304 and the second protrusion part 305 are disposed adjacently with an interval to form a first connecting groove, and the first connecting groove is configured to connect to a to-be-connected member.**

The to-be-connected member may be a lamp housing, a heat dissipation component, or the like.

Optionally, the connecting member 30 in this embodiment of this application may further include other protrusion parts similar to the first protrusion part 304 and the second protrusion part 305. The other protrusion parts may also be disposed adjacently with intervals to form a plurality of connecting grooves, and the plurality of connecting grooves are configured to connect to the lamp housing or the heat dissipation component.

By using the connecting groove formed between the protrusion parts in the connecting member 30 in this embodiment of this application, the sealed connection to the lamp housing or the heat dissipation component can be implemented, so that the dust and water vapor can be effectively prevented from intruding into the space inside the vehicle lamp and damaging the lamp assembly and the circuit, thereby achieving the good lighting effect and the long service life.

**In a possible embodiment, the second connecting part 3022 includes a third surface 3022a (3022) and a fourth surface 3022b (3022), the third surface 3022a (3022) and the fourth surface 3022b (3022) are disposed opposite to each other in the thickness direction of the connecting member 30, and the deformation part 301 protrudes from the third surface 3022a (3022).**

**The connecting member 30 further includes a third protrusion part 306 and a fourth protrusion part 307, the third protrusion part 306 and the fourth protrusion part 307 are annular structures surrounding the mounting hole 303, and the third protrusion part 306 and the fourth protrusion part 307 protrude from the fourth surface 3022b (3022).**

For details, refer to FIG. 11. It may be understood that the third surface 3022a (3022) may be understood as a surface facing the outer side of the lamp housing, and the fourth surface 3022b (3022) may be understood as a surface facing the inner side of the lamp housing.

In addition, the deformation part 301 protrudes from the third surface 3022a (3022), and optionally, the deformation part 301 may alternatively protrude from the fourth surface 3022b

(3022), which may be specifically determined based on the size of the space between the components inside the vehicle lamp. This is not limited in this embodiment of this application.

It may be understood that, similar to the deformation part 301 and the connecting part 302, the annular structures formed by the third protrusion part 306 and the fourth protrusion part 307 each may be specifically a square ring structure, a circular ring structure, an elliptical ring structure, or the like. This is not limited in this embodiment of this application.

Optionally, the connecting member 30 in this embodiment of this application may further include other protrusion parts similar to the third protrusion part 306 and the fourth protrusion part 307.

Through the protrusion parts in the connecting member 30 in this embodiment of this application, a sealed connection to the lamp housing or the heat dissipation component can be implemented, so that dust and water vapor can be effectively prevented from intruding into space inside the vehicle lamp and damaging the lamp assembly and a circuit, thereby achieving a good lighting effect and a long service life.

**In a possible embodiment, in a direction from the mounting hole 303 to the connecting part 302, the third protrusion part 306 and the fourth protrusion part 307 are disposed adjacently with an interval to form a second connecting groove, and the second connecting groove is configured to connect to a to-be-connected member.**

The to-be-connected member may be the lamp housing, the heat dissipation component, or the like.

Optionally, the connecting member 30 in this embodiment of this application may further include other protrusion parts similar to the third protrusion part 306 and the fourth protrusion part 307. The other protrusion parts may also be disposed adjacently with intervals to form a plurality of connecting grooves, and the plurality of connecting grooves are configured to connect to the lamp housing or the heat dissipation component.

By using the connecting groove formed between the protrusion parts in the connecting member 30 in this embodiment of this application, the sealed connection to the lamp housing or the heat dissipation component can be implemented, so that the dust and water vapor can be effectively prevented from intruding into the space inside the vehicle lamp and damaging the lamp assembly and the circuit, thereby achieving the good lighting effect and the long service life.

**In a possible embodiment, the first surface 3021a (3021) of the first connecting part 3021 and the third surface 3022a (3022) of the second connecting part 3022 are located on a same surface, and the second surface 3021b (3021) of the first connecting part 3021 and the fourth surface 3022b (3022) of the second connecting part 3022 are located on a same surface.**

It may be understood that, the surface, of the first connecting part 3021, facing the outer side of the lamp housing and the surface, of the second connecting part 3022, facing the outer side of the lamp housing are located on the same surface, and the surface, of the first connecting part 3021, facing the inner side of the lamp housing and the surface, of the second connecting part 3022, facing the inner side of the lamp housing are located on the same surface.

According to a relative position relationship of the surfaces designed in this embodiment of this application, single-shot molding of the first connecting part 3021 and the second connecting part 3022 can be implemented, with an advantage of simple manufacturing, and space occupation can be reduced.

**In a possible embodiment, the to-be-connected member is integrally formed with the first connecting groove and/or the second connecting groove, or the to-be-connected member is connected to the first connecting groove and/or the second connecting groove through a fastener.**

The to-be-connected member may be the lamp housing, the heat dissipation component, or the like.

**Case 1:** The to-be-connected member is integrally formed with the connecting groove, which may be specifically single-shot molding.

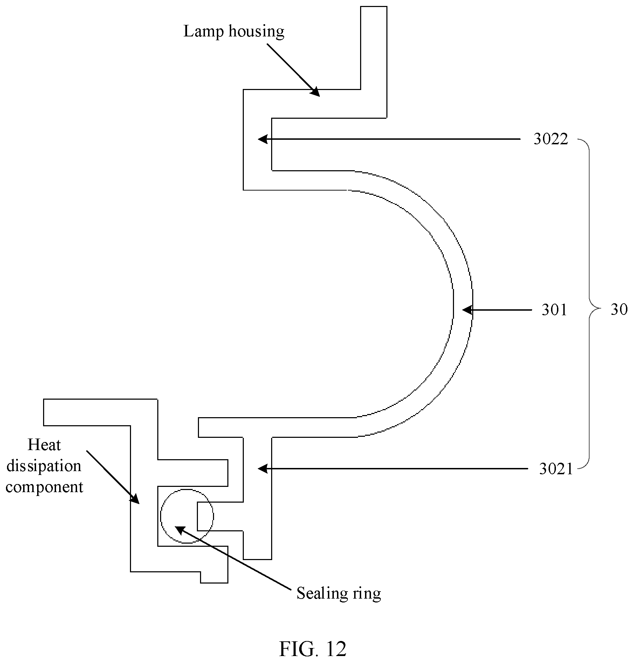

For example, the to-be-connected member is the lamp housing. For details, refer to FIG. 12. FIG. 12 is a diagram of a structure of the connecting member according to an embodiment of this application. It may be understood that FIG. 12 may be considered as a partial cross-sectional view of the connecting member shown in FIG. 10 in an optical axis direction. It may be understood that FIG. 12 may further correspond to an enlarged view of a dashed-line area 60 in the heat dissipation system shown in FIG. 4.

It can be learned from FIG. 12 that the lamp housing may be integrally formed with the connecting groove through single-shot molding. Through a partial thinning design of the connecting member, functions of a flexible connection and a sealed connection of the connecting member can be implemented, with advantages of simple manufacturing and assembly, low costs, and small space occupation.

Optionally, the lamp housing is sealed and connected to the heat dissipation component by using a sealing ring, where the sealing ring may be made of a flexible plastic material. In this way, a sealed connection between the lamp housing and the heat dissipation component can be implemented, so that the dust and water vapor can be effectively prevented from intruding into the space inside the vehicle lamp and damaging the lamp assembly and the circuit, thereby achieving the good lighting effect and the long service life.

**Case 2:** The to-be-connected member is integrally formed with the connecting groove, which may be specifically double-shot molding.

For example, the to-be-connected member is the lamp housing. For details, refer to FIG. 11. It can be learned from FIG. 11 that the lamp housing may be integrally formed with the connecting groove through double-shot molding or overmolding. For example, the inner side of the lamp housing is made of a rigid plastic material, and the outer side of the lamp housing is made of a flexible plastic material. In this way, functions of a flexible connection and a sealed connection between the connecting member and the lamp housing can be implemented, an opening size of the lamp housing can be greatly reduced, and a light adjustment resistance can be reduced, with advantages of simple assembly and low costs.

Optionally, the lamp housing is sealed and connected to the heat dissipation component by using a sealing ring, where the sealing ring may be made of a flexible plastic material. In this way, a sealed connection between the lamp housing and the heat dissipation component can be implemented, so that the dust and water vapor can be effectively prevented from intruding into the space inside the vehicle lamp and damaging the lamp assembly and the circuit, thereby achieving the good lighting effect and the long service life.

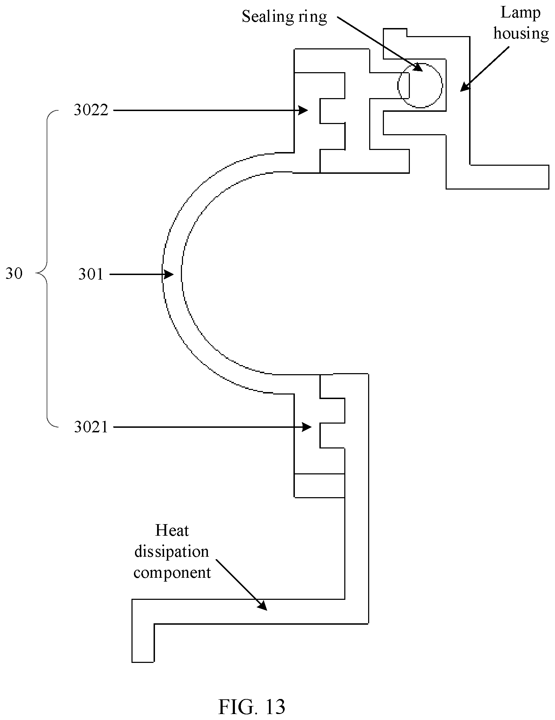

For another example, the to-be-connected member is the heat dissipation component. For details, refer to FIG. 13. FIG. 13 is a diagram of a structure of the connecting member according to an embodiment of this application. It may be understood that FIG. 13 may be considered as a partial cross-sectional view of the connecting member shown in FIG. 10 in an optical axis direction. It may be understood that FIG. 13 may further correspond to an enlarged view of a dashed-line area 60 in the heat dissipation system shown in FIG. 4.

It can be learned from FIG. 13 that the heat dissipation component may be integrally formed with the connecting member through double-shot molding or overmolding. For example, double-shot molding or overmolding is performed on a flange plate of the heat dissipation component. In this way, performance of a flexible connection and a sealed connection between the heat dissipation component and the connecting member can be integrated, a mold size can be reduced, and a light adjustment resistance can be reduced, with advantages of simple assembly and low costs.

Optionally, the lamp housing is sealed and connected to the heat dissipation component by using a sealing ring, where the sealing ring may be made of a flexible plastic material. In this way, a sealed connection between the lamp housing and the heat dissipation component can be implemented, so that the dust and water vapor can be effectively prevented from intruding into the space inside the vehicle lamp and damaging the lamp assembly and the circuit, thereby achieving the good lighting effect and the long service life.

**Case 3:** The connecting member is connected to the first connecting groove and/or the second connecting groove through the fastener.

The to-be-connected member may be fastened to the connecting groove through a fastener such as a screw thread, a pin, or a removable cover plate.

According to this embodiment of this application, the heat dissipation component can be disposed outside, thereby improving the heat dissipation efficiency of the vehicle lamp. In addition, through the elastic deformation of the connecting part and the deformation part of the connecting member, the position of the lamp assembly can be adjusted while the sealing performance of the vehicle lamp is ensured, thereby implementing the light adjustment function of the vehicle lamp, and meeting the requirements for performance and reliability of the vehicle lamp.

This application provides a heat dissipation apparatus. The heat dissipation apparatus is configured to connect to a heat dissipation component, and the heat dissipation apparatus includes a lamp housing and the connecting member shown in FIG. 10 to FIG. 13.

The heat dissipation component is located on an outer side of the lamp housing, the connecting member is connected to the lamp housing, and the connecting member is integrally formed with the lamp housing.

Optionally, the lamp housing may be integrally formed with the connecting member through single-shot molding. Through a partial thinning design of the connecting member, performance of a flexible connection and a sealed connection of the connecting member can be implemented, with advantages of simple manufacturing and assembly, low costs, and small space occupation.

Optionally, the lamp housing may be integrally formed with the connecting member through double-shot molding or overmolding. For example, an inner side of the lamp housing is made of a rigid plastic material, and the outer side of the lamp housing is made of a flexible plastic material. In this way, performance of a flexible connection and a sealed connection between the connecting member and the lamp housing can be implemented, an opening size of the lamp housing can be greatly reduced, and a light adjustment resistance can be reduced, with advantages of simple assembly and low costs.

Optionally, the lamp housing is sealed and connected to the heat dissipation component by using a sealing ring, where the sealing ring may be made of a flexible plastic material. In this way, a sealed connection between the lamp housing and the heat dissipation component can be implemented, so that dust and water vapor can be effectively prevented from intruding into space inside a vehicle lamp and damaging a lamp assembly and a circuit, thereby achieving a good lighting effect and a long service life.

Currently, a heat dissipation component of a vehicle lamp is usually disposed on an inner side of a lamp housing. Due to a limitation of enclosed space within the lamp, the air inside the lamp cannot exchange heat with the outside through convection, resulting in low heat dissipation efficiency. Consequently, an ambient temperature inside the lamp may easily rise sharply, and a light emitting body may be burnt. As a result, in most application scenarios, reliability of the vehicle lamp needs to be ensured by reducing a light emitting power of the vehicle lamp and sacrificing performance of the vehicle lamp.

However, in this embodiment of this application, the heat dissipation component is disposed on the outer side of the lamp housing through a mounting hole of the connecting member, so that the heat dissipation component can be disposed outside, thereby improving heat dissipation efficiency of the vehicle lamp. In addition, through elastic deformation of the connecting member, performance of a flexible connection and a sealed connection of the connecting member can be implemented, a position of the lamp assembly can be adjusted while sealing performance of the vehicle lamp is ensured, thereby implementing a light adjustment function of the vehicle lamp, meeting requirements for performance and reliability of the vehicle lamp, and having advantages of simple manufacturing and assembly, low costs, and small space occupation.

This application provides a heat dissipation apparatus. The heat dissipation apparatus is configured to connect to a lamp housing, and the heat dissipation apparatus includes a heat dissipation component and the connecting member shown in FIG. 10 to FIG. 13.

The heat dissipation component is located on an outer side of the lamp housing, the connecting member is connected to the heat dissipation component, and the connecting member is integrally formed with the heat dissipation component.

Optionally, the heat dissipation component may be integrally formed with the connecting member through double-shot molding or overmolding. For example, double-shot molding or overmolding is performed on a flange plate of the heat dissipation component. In this way, performance of a flexible connection and a sealed connection between the heat dissipation component and the connecting member can be integrated, a mold size can be reduced, and a light adjustment resistance can be reduced, with advantages of simple assembly and low costs.

Optionally, the lamp housing is sealed and connected to the heat dissipation component by using a sealing ring, where the sealing ring may be made of a flexible plastic material. In this way, a sealed connection between the lamp housing and the heat dissipation component can be implemented, so that dust and water vapor can be effectively prevented from intruding into space inside a vehicle lamp and damaging a lamp assembly and a circuit, thereby achieving a good lighting effect and a long service life.

Currently, a heat dissipation component of a vehicle lamp is usually disposed on an inner side of a lamp housing. Due to a limitation of enclosed space within the lamp, the air inside the lamp cannot exchange heat with the outside through convection, resulting in low heat dissipation efficiency. Consequently, an ambient temperature inside the lamp may easily rise sharply, and a light emitting body may be burnt. As a result, in most application scenarios, reliability of the vehicle lamp needs to be ensured by reducing a light emitting power of the vehicle lamp and sacrificing performance of the vehicle lamp.

However, in this embodiment of this application, the heat dissipation component is disposed on the outer side of the lamp housing through a mounting hole of the connecting member, so that the heat dissipation component can be disposed outside, thereby improving heat dissipation efficiency of the vehicle lamp. In addition, through elastic deformation of the connecting member, performance of a flexible connection and a sealed connection of the connecting member can be implemented, a position of the lamp assembly can be adjusted while sealing performance of the vehicle lamp is ensured, thereby implementing a light adjustment function of the vehicle lamp, meeting requirements for performance and reliability of the vehicle lamp, and having advantages of simple manufacturing and assembly, low costs, and small space occupation.

This application provides a heat dissipation system. The heat dissipation system includes a lamp housing, a heat dissipation component, a lamp assembly, and the connecting member shown in FIG. 10 to FIG. 13. Alternatively, the heat dissipation system includes a heat dissipation component, a lamp assembly, and the heat dissipation apparatus. Alternatively, the heat dissipation system includes a lamp housing, a lamp assembly, and the heat dissipation apparatus.

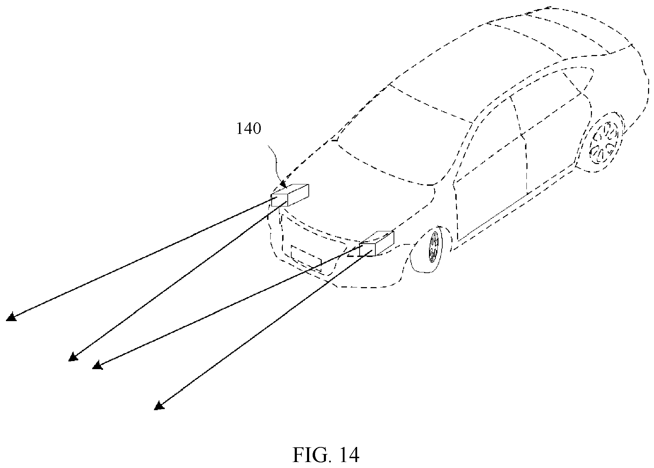

This application provides a mobile terminal. The mobile terminal includes the connecting member shown in FIG. 7 to FIG. 13, the heat dissipation apparatus, or the heat dissipation system shown in FIG. 2 to FIG. 6. For example, FIG. 14 is a diagram of a structure of a mobile terminal according to an embodiment of this application. The mobile terminal may include a vehicle lamp 140, for example, a headlight. The vehicle lamp 140 may be used for lighting, projection, or the like.

It should be understood that the mobile terminal in this application may include an intelligent terminal or a transportation vehicle, for example, a vehicle, a robot, an unmanned aerial vehicle, a watercraft, or a ship. The vehicle is a vehicle in a broad sense, and may be a transportation vehicle (for example, a commercial vehicle, a passenger vehicle, a motorcycle, a flight vehicle, or a train), an industrial vehicle (for example, a forklift, a trailer, or a tractor), an engineering vehicle (for example, an excavator, a bulldozer, or a crane), an agricultural device (for example, a lawn mower or a harvester), or the like. For another example, the robot may be a robot such as an automated guided vehicle (automated guided vehicle, AGV), a walkable conversational robot, or a service robot.

It should be understood that the embodiments shown in FIG. 2 to FIG. 14 are merely used as examples for describing several possible connecting members, heat dissipation apparatuses, heat dissipation systems, mobile terminals provided in this application, and shall not constitute a limitation on this application. New embodiments obtained based on proper variations, supplements, or combinations of the embodiments shown in FIG. 2 to FIG. 14 all fall within the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A connecting member, wherein the connecting member is provided with a mounting hole, the mounting hole penetrates through the connecting member in a thickness direction of the connecting member, a material of the connecting member comprises an elastic material, and the connecting member comprises:
a connecting part and a deformation part, wherein
the deformation part is fastened to the connecting part, the deformation part and the connecting part are annular structures surrounding the mounting hole, and the deformation part protrudes from the connecting part in a thickness direction of the connecting part.

2. The connecting member according to claim 1, wherein a cross section of the deformation part in the thickness direction of the connecting member is in an arc shape.

3. The connecting member according to claim 1 or 2, wherein the deformation part comprises at least one wrinkled section, and a wrinkle direction of the wrinkled section is a direction from the mounting hole to the deformation part.

4. The connecting member according to any one of claims 1 to 3, wherein the deformation part comprises a bent part, a bending direction of the bent part is around the thickness direction of the connecting part, and the bent part comprises at least one wrinkled section.

5. The connecting member according to any one of claims 1 to 4, wherein the deformation part further comprises a straight part, an extension direction of the straight part is parallel to a length direction or a width direction of the connecting part, and the straight part comprises at least one wrinkled section.

6. The connecting member according to any one of claims 1 to 5, wherein the connecting part comprises:
a first connecting part and a second connecting part, wherein
the first connecting part and the second connecting part are annular structures surrounding the mounting hole, an inner periphery of the first connecting part forms a hole wall surface of the mounting hole, the deformation part surrounds an outer periphery of the first connecting part, an inner periphery of the deformation part is fastened to the outer periphery of the first connecting part, the second connecting part surrounds an outer periphery of the deformation part, and an inner periphery of the second connecting part is fastened to the outer periphery of the deformation part.

7. The connecting member according to claim 6, wherein the first connecting part comprises a first surface and a second surface, the first surface and the second surface are disposed opposite to each other in the thickness direction of the connecting member, and the deformation part protrudes from the first surface; and
the connecting member further comprises a first protrusion part and a second protrusion part, the first protrusion part and the second protrusion part are annular structures surrounding the mounting hole, and the first protrusion part and the second protrusion part protrude from the second surface.

8. The connecting member according to claim 7, wherein in a direction from the mounting hole to the connecting part, the first protrusion part and the second protrusion part are disposed adjacently with an interval to form a first connecting groove, and the first connecting groove is configured to connect to a to-be-connected member.

9. The connecting member according to claim 6, wherein the second connecting part comprises a third surface and a fourth surface, the third surface and the fourth surface are disposed opposite to each other in the thickness direction of the connecting member, and the deformation part protrudes from the third surface; and
the connecting member further comprises a third protrusion part and a fourth protrusion part, the third protrusion part and the fourth protrusion part are annular structures surrounding the mounting hole, and the third protrusion part and the fourth protrusion part protrude from the fourth surface.

10. The connecting member according to claim 9, wherein in a direction from the mounting hole to the connecting part, the third protrusion part and the fourth protrusion part are disposed adjacently with an interval to form a second connecting groove, and the second connecting groove is configured to connect to a to-be-connected member.

11. The connecting member according to any one of claims 6 to 10, wherein the first surface of the first connecting part and the third surface of the second connecting part are located on a same surface, and the second surface of the first connecting part and the fourth surface of the second connecting part are located on a same surface.

12. The connecting member according to claim 8 or 10, wherein the to-be-connected member is integrally formed with the first connecting groove and/or the second connecting groove, or the to-be-connected member is connected to the first connecting groove and/or the second connecting groove through a fastener.

13. A heat dissipation apparatus, wherein the heat dissipation apparatus is configured to connect to a heat dissipation component, and the heat dissipation apparatus comprises a lamp housing and the connecting member according to any one of claims 1 to 12; and
the heat dissipation component is located on an outer side of the lamp housing, the connecting member is connected to the lamp housing, and the connecting member is integrally formed with the lamp housing.

14. The heat dissipation apparatus according to claim 13, wherein a joint between the connecting member and the lamp housing is integrally formed from a same material, or a joint between the connecting member and the lamp housing is integrally formed from different materials.

15. The heat dissipation apparatus according to claim 13 or 14, wherein the lamp housing is sealed and connected to the heat dissipation component by using a sealing ring.

16. A heat dissipation apparatus, wherein the heat dissipation apparatus is configured to connect to a lamp housing, and the heat dissipation apparatus comprises a heat dissipation component and the connecting member according to any one of claims 1 to 12; and
the heat dissipation component is located on an outer side of the lamp housing, the connecting member is connected to the heat dissipation component, and the connecting member is integrally formed with the heat dissipation component.

17. The heat dissipation apparatus according to claim 16, wherein a joint between the connecting member and the heat dissipation component is integrally formed from different materials.

18. The heat dissipation apparatus according to claim 16 or 17, wherein the heat dissipation component is sealed and connected to the lamp housing by using a sealing ring.

19. A heat dissipation system, wherein the heat dissipation system comprises a lamp housing, a heat dissipation component, a lamp assembly, and the connecting member according to any one of claims 1 to 12; or
the heat dissipation system comprises a heat dissipation component, a lamp assembly, and the heat dissipation apparatus according to any one of claims 13 to 15; or
the heat dissipation system comprises a lamp housing, a lamp assembly, and the heat dissipation apparatus according to any one of claims 16 to 18.

20. A mobile terminal, wherein the mobile terminal comprises the connecting member according to any one of claims 1 to 12, the heat dissipation apparatus according to any one of claims 13 to 15, the heat dissipation apparatus according to any one of claims 16 to 18, or the heat dissipation system according to claim 19.
